Europäisches Patentamt

European Patent Office

Office européen des brevets

(11) Publication number: **0 400 883**
**A2**

## EUROPEAN PATENT APPLICATION

(21) Application number: **90305592.9**

(22) Date of filing: **23.05.90**

(51) Int. Cl.5: **C08G 63/52, C08F 283/01**

(30) Priority: **02.06.89 US 360647**

(43) Date of publication of application:
**05.12.90 Bulletin 90/49**

(84) Designated Contracting States:
**BE DE FR GB IT NL**

(71) Applicant: **ARCO CHEMICAL TECHNOLOGY INC.**
**3 Christina Centre Suite 902 201 N Walnut Street**
**Wilmington Delaware 19801(US)**

(72) Inventor: **Harris, Stephen H.**
**1206 Estate Drive**
**West Chester, Pennsylvania 19380(US)**

(74) Representative: **Cropp, John Anthony David et al**
**MATHYS & SQUIRE 10 Fleet Street**
**London, EC4Y 1AY(GB)**

(54) **High reactivity thermosettable molding compositions containing 2-methyl-1,3-propanediol.**

(57) Styrene-soluble unsaturated polyesters useful in high reactivity molding resin compositions wherein the diol component comprises from about 10 to 100 mole percent 2-methyl-1,3-propanediol. Molded thermoset articles can be obtained from these compositions using short cycle times and have unexpectedly high flexibility, tensile strength and modulus.

EP 0 400 883 A2

# HIGH REACTIVITY THERMOSETTABLE MOLDING COMPOSITIONS CONTAINING 2-METHYL-1,3-PRO-PANEDIOL

The present invention relates to unsaturated polyesters suitable for use in thermosettable molding compositions. More particularly, the invention pertains to unsaturated polyesters containing 2-methyl-1,3-propanediol which can be employed in the preparation of molded thermoset articles having improved properties.

## BACKGROUND OF THE INVENTION

The use of unsaturated polyesters in molded thermoset plastic articles is well known. Condensation polymerization of one or more diols and one or more dicarboxylic acids or dicarboxylic acid derivatives is typically used to produce unsaturated polyesters, having generally alternating diol-diacid recurring units. An unsaturated polyester may be combined with a vinyl monomer such as styrene to form a molding resin composition which can then be cured using a catalyst such as an organic peroxide. The catalyst initiates free radical interpolymerization of the unsaturated polyester and the vinyl monomer to form a cross-linked, thermoset network. Before curing, the molding resin composition is commonly compounded with fillers, reinforcement materials such as glass fiber, and other additives.

Thermosettable molding compositions containing unsaturated polyesters have long been recognized as versatile, relatively low cost systems which are useful in a wide variety of applications. The properties of the cured resin may generally be altered as desired by judicious choice of specific components of the molding composition. For example, to shorten cure time and to increase the hardness, stiffness, and heat resistance of the cured resin, the mole ratio of unsaturated dicarboxylic acid in the polyester to saturated dicarboxylic acid in the polyester may be increased. Compositions containing unsaturated polyesters with relatively high unsaturated:saturated ratios are often referred to as high reactivity molding resin compositions.

However, prior art high reactivity molding resin compositions generally suffer from certain disadvantages. As a result of increasing the level of unsaturation in the polyester and thus the degree of cross-linking in the cured resin, such systems tend to be inherently much less flexible and exhibit an excessive amount of shrinkage while curing. One solution to the shrinkage problem has been to use a low profile additive which may be a styrene, acrylic, or other thermoplastic polymer. Although such low profile additives improve the surface appearance of the molded thermoset article, the cured resin tends to remain quite brittle and inflexible. This deficiency may be offset by incorporating flexibilizing diols such as diethylene glycol, dipropylene glycol, and the like into the unsaturated polyester. However, only a small amount of such diols can be used before physical properties, water resistance, polyester color and vinyl monomer compatibility are seriously affected. An alternative approach to increasing flexibility is to replace part of the unsaturated dicarboxylic acid with a linear aliphatic dicarboxylic acid such as adipic acid. As a result, however, productivity is decreased substantially due to the lower reactivity of the unsaturated polyester and the consequent longer cure time.

Clearly, there is a need for improved unsaturated polyesters which are low in color, highly soluble in vinyl monomer, and which may be used to produce molded thermoset articles having enhanced strength, flexibility, heat resistance and stiffness. The unsaturated polyesters should be highly reactive in order that short cycle times may be realized.

## DETAILED DESCRIPTION OF THE INVENTION

The unsaturated polyester of this invention is comprised of recurring units of an unsaturated dicarboxylic acid moiety and a diol.

The unsaturated dicarboxylic acid moiety may be derived from any suitable dicarboxylic acid or dicarboxylic acid derivative containing a carbon-carbon double bond that is polymerizable in a free radical manner with a vinyl monomer. Depending on the method of unsaturated polyester preparation selected, such compounds may comprise the parent diacid or the corresponding anhydride, ester, acid halide, or the like. Examples of unsaturated dicarboxylic acid moieties include, but are not limited to, maleic acid, fumaric acid, itaconic acid, citraconic acid, mesaconic acid, and aconitic acid. Mixtures of unsaturated dicarboxylic acid moieties may be employed. Maleic acid and fumaric acid are the preferred unsaturated dicarboxylic acid moieties. A maleic acid moiety may be introduced through the use of maleic anhydride, maleic acid, dimethyl maleate, or other such derivatives, for example. A fumaric acid moiety can be incorporated either by using fumaric acid or a fumaric acid derivative or by using maleic acid or a maleic acid derivative and then isomerizing the maleic acid moiety in the polyester to a fumaric acid moiety.

A saturated dicarboxylic acid moiety may also be present in the unsaturated polyester of this invention, provided that the molar ratio of unsaturated dicarboxylic acid moiety to saturated dicarboxylic acid moiety is greater than about 2 and the molar ratio of diol to the combined amount of saturated and unsaturated dicarboxylic acid moiety is from about 0.90 to 1.30.

The saturated dicarboxylic acid moiety may be any dicarboxylic acid or derivative, including anhydrides, esters, acid halides, and the like, that does not contain a double bond reactive with a vinyl monomer in a free radical addition polymerization. Phthalic acids such as orthophthalic acid, isophthalic acid, terephthalic acid, and alkyl-substituted phthalic acids, halogenated phthalic acids such as tetrabromo-and tetrachloro phthalic acid, hydrogenated phthalic acids such as tetrahydrophthalic acid and hexahydrophthalic acid, Diels- Alder adducts of cyclic conjugated diolefins with unsaturated dicarboxylic acids such as norbornene dicarboxylic acid and bicyclo [2.2.2] octene dicarboxylic acid, and linear aliphatic dicarboxylic acids of formula

$$HO \overset{O}{\overset{\|}{C}} (CH_2)_n \overset{O}{\overset{\|}{C}} OH$$ where $n = 2\text{-}8$ such as adipic acid, sebacic, azelaic and succinic acid are examples of suitable saturated dicarboxylic acid moieties. The use of mixtures of saturated dicarboxylic acid moieties is also contemplated. Orthophthalic acid (from phthalic anhydride, for example) and isophthalic acid are the preferred saturated dicarboxylic acid moieties.

Minor amounts of unsaturated mono carboxylic acids such as methacrylic acid and acrylic acid and saturated polycarboxylic acids such as trimellitic acid may also be used in the unsaturated polyesters of this invention.

At least about 10 mole percent of the diol recurring units in the unsaturated polyester are derived from 2-methyl-1,3-propanediol. This diol may be obtained by a number of synthetic routes. For example, the hydroformylation/hydrogenation of allyl alcohol yields 2-methyl-1,3-propanediol in addition to 1,4-butanediol. Both of the hydroxyl groups of 2-methyl1,3-propanediol are primary; condensation polymerization of this diol therefore is advantageously rapid. The unsaturated polyesters of this invention generally are relatively low in color. Another processing advantage of 2-methyl-1,3-propanediol is that it is relatively high boiling (b.p. 213°C) compared to propylene glycol and does not tend to sublime at high temperatures as does neopentyl glycol.

Optionally, from 0 up to about 90 mole percent of the diol component may be a dihydroxy compound other than 2-methyl-1,3-propanediol. Any suitable diol, especially aliphatic diols having up to six carbon atoms, may be used, including, for example, 1,2-diols such as ethylene glycol, 1,2-propylene glycol, and 1,2-butylene glycol, 1,3-diols such as neopentyl glycol, 1,3-propanediol, and 1,3-butanediol, 1,4-diols such as 1,4-butanediol, as well as other diols such as 2-methyl-1,3-pentanediol, 1,4-cyclohexanedimethanol, diethylene glycol, tripropylene glycol, and 1,6-hexanediol. Other diols, such as Bisphenol A or alkoxylated Bisphenol A, may also be used. In general, it is preferred that the molecular weight of the diol not exceed about 250. Mixtures of diols may be used. Propylene glycol and neopentyl glycol are the most preferred diols to be used in combination with 2-methyl-1,3-propanediol. The preferred amount of propylene glycol or neopentyl glycol present is from about 10 to 90 mole percent of the total amount of diol. Minor amounts of polyols (i.e., compounds having more than two hydroxy groups) may be used.

The molar ratio of diol to total dicarboxylic acid moiety in the unsaturated polyester of this invention is from about 0.90 to 1.30, preferably from about 1.00 to 1.15. The number of moles of total dicarboxylic acid moiety is equal to the number of moles of unsaturated dicarboxylic acid moiety plus the number of moles of saturated dicarboxylic acid moiety (if any). The unsaturated polyester has a generally alternating structure in which dicarboxylic acid moieties are separated by diol units.

Any of the methods known in the art for the condensation polymerization of diols and dicarboxylic acids or dicarboxylic acid derivatives may be used to prepare the unsaturated polyesters of this invention. Suitable methods are described, for example, in G. Odian Principles of Polymerization 2nd Ed., John Wiley and Sons, New York, 1981, pp. 102-105, the teachings of which are incorporated herein by reference. For example, the unsaturated polyesters may be produced by direct esterification of a dicarboxylic acid or dicarboxylic aid anhydride with a diol, by reaction of a dicarboxylic acid halide with an aliphatic diol, or by transesterification of a dicarboxylic acid ester with a diol. For reasons of economy and convenience, direct esterification is the preferred method.

Typically, one or more diols, one or more dicarboxylic acids, and (optionally) a condensation catalyst are combined in a reaction vessel and heated to between about 100°C and 280°C (preferably, between about 180°C and 250°C). The condensation catalyst may be, for example, a protic or Lewis acid, a base such as calcium acetate, antimony trioxide, or titanium tetralkoxide, or an alkyl tin compound such as dibutyl tin oxide, hydrated monobutyl tin oxide, or dibutyl tin dilaurate. The water produced as a by-product in the condensation reaction is preferably removed by distillation, either at atmospheric or reduced pressure. Any diol removed overhead is preferably recycled to the reaction vessel. An azeotrope agent such as xylene, toluene, or other such organic solvent can be used to facilitate the removal of water; this is particularly advantageous in the latter stages of the condensation polymerization. If a saturated dicarboxylic acid is used, it is preferred that the saturated dicarboxylic acid be reacted first with the diol before the unsaturated dicarboxylic acid is introduced. The reactive unsaturation will thus tend to be near the ends of the resulting polyester.

Condensation is continued until the desired viscosity, molecular weight, or combined acid and hydroxyl number is achieved. The degree of polymerization of the the unsaturated polyester of this invention is not particularly critical, but preferably the unsaturated polyester has a combined acid and hydroxyl number of from about 35 to 250 milligrams of potassium hydroxide per gram of unsaturated polyester. More preferably, the combined acid and hydroxyl number is from about 75 to 160 milligrams of potassium hydroxide per gram of unsaturated polyester. The number average molecular weight is preferably from about 500 to 3000 or, more preferably, from about 700 to 1500. In preparing the unsaturated polyester, it is usually preferred to use a slight excess (1-10%) of the diol so as to have more hydroxy end-groups than carboxylic acid end-groups in the final product and to compensate for certain side reactions involving the diol which sometimes occur.

To provide the thermosettable molding composition of this invention, the unsaturated polyester is combined with one or more vinyl monomers. The weight ratio of unsaturated polyester:vinyl monomer is not critical, but generally is from about 25:75 to 90:10 or, more preferably, from about 50:50 to 75:25. The molar ratio of vinyl monomer:unsaturated dicarboxylic acid moiety is preferably from about 1:1 to 6:1. Suitable vinyl monomers are any ethylenically unsaturated compounds capable of addition polymerization in a free radical manner or which are known in the art to be usable in an unsaturated polyester molding resin composition. Preferred vinyl monomers include vinyl aromatic monomers such as styrene, divinyl benzene, $\alpha$-methyl styrene, alkyl substituted styrenes such as vinyl toluene and t-butyl styrene, halo substituted styrenes such as chlorostyrene, and the like. Other vinyl monomers which may be used include, for example, acrylic esters such as methyl methacrylate and ethyl acrylate, unsaturated monocarboxylic acids such as acrylic acid and methacrylic acid, mono- and polyolefinic hydrocarbons such as isoprene, heptene, and cyclohexene, unsaturated nitriles such as acrylonitrile, as well as vinyl chloride, vinyl acetate, triallyl cyanurate, and diallyl phthalate. Mixtures of vinyl monomers may be used. It is preferred that the vinyl monomer be a liquid at ambient temperatures so that it may function as a solvent and diluent for the thermosettable molding resin composition. Styrene is the preferred vinyl monomer.

One or more inhibitors are present in the thermosettable molding resin composition to provide sufficient shelf life and to control gel and cure times once the composition has been catalyzed. If inhibitor is not present, the thermosettable molding resin composition will begin to gel almost immediately after preparation. Sufficient inhibitor is present to effectively prevent gellation of the composition at room temperature in the absence of catalyst. Any inhibitor known to those skilled in the art may be used, including, for example, hydroquinone, substituted derivatives of hydroquinone, benzoquinone, substituted phenols such as tertiary butyl catechol, and quaternary ammonium salts. From about 0.001 to 0.10 parts by weight of inhibitor per 100 parts of thermosettable molding resin composition are preferably present.

If desired, a thickener may be added to the thermosettable molding composition of this invention to modify the viscosity of the composition. Any suitable thickener may be used, including, for example, magnesium oxide, alkali or alkaline earth oxides and hydroxides such as magnesium hydroxide, calcium oxide and calcium hydroxide, as well as isocyanates and the like and mixtures thereof. The amount of thickener is preferably from about 0.1 to 10 weight percent based on the total weight of the thermosettable molding composition.

Conventional unsaturated polyesters, including rigid, resilient, or flexible types, may be used in combination with the unsaturated polyester of this invention. Examples of such standard resins are described in J. Makhlouf Encyclopedia of Chemical Technology 3rd Ed., Vol, 18 (1982), pp. 575-594 and J. Selley Encyclopedia of Polymer Science and Engineering Vol. 12 (1988), pp. 256-290, the teachings of which are incorporated by reference herein in their entirety. Thermoplastic additives to decrease shrinkage during curing and to improve the surface profile of the cured resin may also be incorporated into the thermosettable molding compositions of this invention. Suitable thermoplastic additives include any of the materials useful for the production of low shrink low profile cured resins in general, including, for example, co- and homopolymers of styrene, caprolactone polymers, acrylic polymers, polyolefins, poly vinyl chloride, poly vinyl acetate, vinyl chloride vinyl acetate copolymers, and the like and mixtures thereof.

A filler may also be present in the thermosettable molding composition of this invention. Fillers help to opacify the cured resin, reduce shrinkage, and improve hardness and also aid in pigment dispersion. Carbonates, sulfates, clays, talcs, and the like as well as any other fillers known in the art may be used. The filler, which preferably has a small average particle size, may comprise from 0 to about 80 weight percent of the thermosettable molding resin composition. Other additives such as accelerators, pigments, UV stabilizers, release agents, and the like may also be present in the compositions of this invention.

Reinforced plastic articles may be obtained by incorporating a reinforcement material or combination of reinforcement materials into the thermosettable molding resin composition of this invention before curing. Any suitable reinforcement material is usable, including glass fiber mats, glass rovings, milled glass fibers, asbestos fibers, polyamide fibers, polyester fibers, chopped glass fibers, carbon fibers, or Keylar® fibers (a product of E. I. duPont de Nemours). The reinforcement material preferably comprises from 1-75 weight percent of the thermosettable molding resin composition.

The thermosettable molding resin composition of this invention is formed into a molded plastic article by combining the molding composition with a catalyst, together with any additives, to form a moldable resin mixture and then curing the moldable resin mixture for a time and at a temperature effective to cross-link and solidify the moldable resin mixture. This molding process may be carried out using any suitable method known in the art, including, for example, sheet molding, bulk or dough molding, press or compression molding, cast molding, lamination (including hand lay-up, spray-up, continuous lamination, and filament winding), pultrusion, roto molding, injection molding, matched die molding (including preform molding, premix molding, and prepreg molding), putty or patch molding, and resin transfer molding.

Suitable catalysts include any of the catalysts capable of initiating free radical polymerization of the vinyl monomer and unsaturated polyester. The amount used should be sufficient to accomplish substantial reaction of the ethylenically unsaturated components upon curing; typically, this will be from about 0.5 to 5 parts by weight per 100 parts of the thermosettable molding resin composition. Suitable catalysts include, but are not limited to, organic hydroperoxides such as cumene hydroperoxide, organic peroxides such as di-t-butyl peroxide and dicumyl peroxide, peresters of carboxylic acids such as t-butyl peroctoate and t-butyl perbenzoate, perketals, perketones such as methyl ethyl ketone hydroperoxide, diacyl peroxides such as benzoyl peroxide and lauroyl peroxide, as well as peroxidicarbonates and azo compounds. Mixtures of catalysts may advantageously be used. Benzoyl peroxide, methyl ethyl ketone hydroperoxide, and t-butyl peresters are the preferred initiators. As is well known in the art, the gel and cure time of the moldable resin mixture maybe controlled as desired by selection of different catalyst/inhibitor systems, and by varying the relative amounts of each component used. Depending upon the molding process, catalyst/inhibitor system, and particular thermosettable molding resin composition used, curing may be accomplished either at ambient temperature and pressure or at elevated temperatures and pressures.

The molded plastic articles produced in accordance with this invention have an outstanding overall balance of properties as a result of the 2-methyl-1,3-propanediol-containing unsaturated polyester employed. High tensile strength, hardness, and stiffness are obtained in combination with fast cure time and excellent flexibility, elongation, and flexural strength. These properties are unexpected in view of the significant decreases in modulus, melting point, and softening point which are known to result when 2-methyl-1,3-propanediol is incorporated into high molecular weight saturated polyester thermoplastic resins (U.S. Pat. Nos. 4,396,746; 4,415,727; and 4,381,379). In addition, the thermosettable molding compositions of this invention remain homogeneous for prolonged periods of time at room temperature due to the high solubility of the unsaturated polyester in styrene and other vinyl monomers.

Without further elaboration, it is believed that one skilled in the art can, using the preceding description, utilize the present invention to its fullest extent. The following examples, therefore, are to be considered as merely illustrative and not limitative of the invention in any way whatsoever. Without departing from the spirit and scope of this invention, one skilled in the art can make various changes and modifications of the invention to adopt it to various usages, conditions, and embodiments. All of these variations are considered to be encompassed by the present invention.

EXAMPLES 1-5

These examples demonstrate the advantages of the thermosettable molding compositions of this invention compared to prior art compositions in which the high reactivity unsaturated polyester does not contain 2-methyl-1,3-propanediol.

A 5 neck 2L flask fitted with mechanical stirrer, thermometer, nitrogen sparge, sample port, and steam jacketed partial reflux condenser was charged with 1.5 moles phthalic anhydride, 4.5 moles maleic anhydride, and 6.6 moles diol. In each example, at least 4.8 moles of the diol was propylene glycol. Example 1 used 1.8 moles 2-methyl-1,3-propanediol as the additional diol, while Comparative Examples 2-4 used 1.8 moles of neopentyl glycol, dipropylene glycol, or diethylene glycol as the second diol. Comparative Example 5 used a total of 6.6 moles propylene glycol. The mixture was heated to 100°C, resulting in a noticeable exotherm. The pot temperature was raised to 210°C over the course of 7 hours with removal of water. The acid number and Gardner-Holt viscosity (determined as a 60% solution in ethylene glycol monomethyl ether) of the product obtained in each case are given in Table I.

The unsaturated polyesters were cooled, diluted with styrene to give 65% solutions, and inhibited with 100 ppm tert-butyl catechol and 100 ppm para-benzoquinone. The unsaturated polyester of Comparative Example 4 separated from solution after only 2 days. The thermosettable molding compositions thus obtained were cured by adding 1 weight percent benzoyl peroxide and forming the moldable resin mixtures into 1/8" thick plaques using glass plate molds. The plaques were oven-cured 16 hours at 57°C, 1 hour at 82°, and finally 1 hour at 212°C. Physical properties were determined using appropriate ASTM test methods. The properties of the cured compositions are given in Table I.

The high reactivity unsaturated polyester of this invention (Example 1) exhibited the best overall balance of properties as a cured resin and remained completely soluble in styrene for over 6 months. The unsaturated polyester of Example I was also considerably lighter in color than the products of Examples 2-5. Surprisingly, even though the % elongation value (a measure of flexibility) of the cured composition of this invention was significantly higher than the values observed using the prior art compositions of Comparative Examples 2-5, the hardness, tensile strength, tensile modulus, flexural strength, and flexural modulus were not adversely affected and were even somewhat improved. This finding was unexpected since flexibility in a high reactivity molding composition can generally only be enhanced at the expense of hardness, strength and stiffness.

## EXAMPLES 6-8

These examples illustrate the preparation of reinforced molded plastic articles using the high reactivity unsaturated polyester of this invention.

Benzoyl peroxide (1.26 parts) was diluted with 29.2 parts of styrene. To this solution was added, in order, 97.0 parts of a unsaturated polyester styrene mixture, 0.4 parts water, 4 parts zinc stearate (release agent), and 220 parts calcium carbonate (filler). In Example 6, the unsaturated polyester used was the product obtained in Example 1. In Example 7, the unsaturated polyester was prepared as described in Examples 1-5 using 0.6 moles 2-methyl-1,3-propanediol and 6.0 moles of propylene glycol. Comparative Example 8 used the unsaturated polyester from Comparative Example 5, in which the only diol present was propylene glycol.

The resulting paste was mixed thoroughly before mixing in 1 part calcium oxide (thickener) and 60 parts 1/4" chopped glass fibers. The paste was kneaded and aged overnight between two sheets of polyethylene. The resulting slightly tacky sheet was then cured at 130°C for 2 minutes in a 5 x 7" mold.

The molded reinforced plaques prepared using 2-methyl-1,3-propanediol-containing unsaturated polyester (Examples 6 and 7) had very smooth surfaces which were substantially free of defects. The physical properties of the molded plaques are shown in Table II. Increasing the proportion of 2-methyl-1,3-propanediol relative to propylene glycol in the unsaturated polyester not only increased the flexibility and impact strength but unexpectedly resulted in enhanced flexural strength and modulus as well. The hardness of the molded plaques was not adversely affected by the use of unsaturated polyester containing 2-methyl-1,3-propanediol; this result was surprising in light of prior art indicating a significant drop in hardness when 2-methyl-1,3-propanediol is incorporated into a low reactivity unsaturated polyester (Jpn. Pat. No. 56-155223).

TABLE I

| Example | 1 | 2[1] | 3[1] | 4[1,2] | 5[1] |
|---|---|---|---|---|---|
| Moles PG | 4.8 | 4.8 | 4.8 | 4.8 | 6.6 |
| Moles Other Diol | 1.8 | 1.8 | 1.8 | 1.8 | -- |
| Other Diol | MPD | NPD | DPG | DEG | -- |
| Acid # | 19 | 17 | 19 | | 21 |
| G-H Viscosity | J-K | N-O | J-K | | K |
| Tensile Strength, psi | 7126 | 6912 | 7375 | | 6824 |
| Tensile Mod., x $10^3$ psi | 299 | 280 | 305 | | 320 |
| Flexural Strength, psi | 13,700 | 10,900 | 13,500 | | 9890 |
| Flexural Mod., x $10^3$ psi | 530 | 538 | 510 | | 566 |
| Elongation, % | 4.4 | 3.5 | 3.5 | | 3.5 |

[1] Comparative example
[2] Styrene solution separated after two days.

TABLE II

| Example | 6 | 7 | 8[1] |
|---|---|---|---|
| Moles PG | 4.8 | 6.0 | 6.6 |
| Moles MPD | 1.8 | 0.6 | 0 |
| Flexural Strength, psi | 9498 | 8331 | 8414 |
| Flexural Modulus, x $10^6$ psi | 1.74 | 1.82 | 1.60 |
| Notched Izod, ft.lbs/in | 5.0 | 4.7 | 4.3 |
| % Change on Cooling to -20° F | | | |
| Flexural Strength | + 35 | + 24 | + 4.7 |
| Flexural Modulus | -1 | -3 | + 9 |

[1] Comparative Example

## Claims

1. An unsaturated polyester suitable for use in an improved high reactivity thermosettable molding resin composition, said polyester comprising:

(a) recurring units of an unsaturated dicarboxylic acid moiety; and

(b) recurring units of a diol;

wherein the molar ratio of diol to unsaturated dicarboxylic acid moiety is from about 0.90 to 1.30, from about 10 to 100 mole percent of the diol is 1-methyl-1,3-propanediol, and the combined acid and hydroxyl number is from about 35 to 250 milligrams of potassium hydroxide per gram of unsaturated polyester.

2. The unsaturated polyester of claim 1 further comprising recurring units of a saturated dicarboxylic acid moiety, with the proviso that the molar ratio of unsaturated dicarboxylic acid moiety:saturated dicarboxylic acid moiety is greater than about 2:1 and that the molar ratio of diol to the combined amount of saturated and unsaturated dicarboxylic acid moiety is from about 0.90 to 1.30.

3. The unsaturated polyester of claim 2 wherein the saturated dicarboxylic acid moiety is selected from phthalic acids, halogenated phthalic acids, hydrogenated phthalic acids, Diels-Alder adducts of cyclic conjugated diolefins and unsaturated dicarboxylic acids, linear aliphatic dicarboxylic acids of formula

$$HO \overset{O}{\overset{\|}{C}} (CH_2)_n \overset{O}{\overset{\|}{C}} OH$$ wherein n = 2-8, and mixtures thereof.

7

4. The unsaturated polyester of claim 1, claim 2 or claim 3 wherein the unsaturated dicarboxylic acid moiety is selected from maleic acid, fumaric acid, itaconic acid, citraconic acid, mesaconic acid, aconitic acid, and mixtures thereof.

5. The unsaturated polyester of any one of claims 1 to 4 wherein from about 10 to 90 mole percent of the diol is selected from neopentyl glycol and propylene glycol.

6. An unsaturated polyester as claimed in claim 2 or claim 5, comprising:

(a) recurring units of an unsaturated dicarboxylic acid moiety selected from maleic acid, fumaric acid, itaconic acid, citraconic acid, mesaconic acid, aconitic acid, and mixtures thereof;

(b) recurring units of a saturated dicarboxylic acid moiety selected from phthalic acids, Diels-Alder adducts of cyclic conjugated diolefins and unsaturated dicarboxylic acids, halogenated phthalic acids, hydrogenated phthalic acids, linear aliphatic dicarboxylic acids of formula

$$HO\overset{O}{\overset{\|}{C}}(CH_2)_n\overset{O}{\overset{\|}{C}}OH \text{ wherein } n = 2\text{-}8, \text{ and mixtures thereof;}$$

and

(c) recurring units of a diol;

wherein the molar ratio of diol:total dicarboxylic acid moiety is from about 1.00 to 1.15.

7. A high reactivity thermosettable molding resin composition suitable for producing a molded thermoset plastic article, said molding composition comprising:

(a) an unsaturated polyester as claimed in any one of claims 1 to 6;

(b) a vinyl monomer;

(c) an amount of an inhibitor effective to prevent gellation of the resin composition at room temperature in the absence of catalyst;

wherein the weight ratio of unsaturated polyester:vinyl monomer is from about 25:75 to 90:10.

8. The molding resin composition of claim 7 further comprising a filler.

9. The molding resin composition of claim 7 or claim 8 further comprising a thickener.

10. The molding resin composition of claim 7, claim 8 or claim 9 further comprising a reinforcement material.

11. The molding resin composition of any one of claims 7 to 10 wherein the vinyl monomer is a vinyl aromatic monomer.

12. The molding resin composition of claim 11 wherein the vinyl monomer is styrene.

13. A method of producing a molded thermoset plastic article, said method comprising (a) admixing a molding resin composition as claimed in any one of claims 7 to 12 and an amount of a catalyst effective to accomplish substantial reaction of the unsaturated polyester and the vinyl monomer to form a moldable resin mixture and (b) curing and molding the moldable resin mixture for a time and at a temperature sufficient to cross-link and solidify the moldable resin mixture to form the molded thermoset plastic article.

14. The method of claim 13 wherein the catalyst is selected from organic peroxides, organic hydroperoxides, perketones, diacyl peroxides, peresters of carboxylic acids, and mixtures thereof.

15. The method of claim 13 or claim 14 wherein a reinforcement material is combined with the molding resin composition or moldable resin mixture before step (b).

16. A molded thermoset plastic article comprising a cured molding composition as claimed in any one of claims 7 to 12.